# EUROPEAN PATENT APPLICATION

(11) **EP 2 991 248 A2**
(43) Date of publication of application: **02.03.2016**
(21) Application number: 15153589.5
(22) Date of filing: 03.02.2015
(51) Int. Cl.: H04H 20/78

(54) **Switchable diplexer and cable modem**

(30) Priority: 01.09.2014 TW 103130133
(71) Applicant: Compal Broadband Networks Inc., 114 Taipei City (TW)
(72) Inventor: Chen, Hung-Wei, 302 Hsinchu County (TW)
(74) Representative: Straus, Alexander

(57) **Abstract**

A switchable diplexer, disposed in a cable modem, comprises a control node configured to receive a control signal, a plurality of filter circuits and a first switch element. At least one of the plurality of filter circuits is operated in a frequency band different from the frequency bands of the other in the plurality of filter circuits. The first switch element is coupled between the control node and one end of each of the plurality of filter circuits. The first switch element switches between the plurality of filter circuits according to the control signal.

## Description

### Field of the Invention

The present invention relates to a switchable diplexer and a cable modem, and more particularly, to a switchable diplexer and a cable modem capable of filtering out noise and outputting signals in different operational bands.

### Background of the Invention

Data over cable services interface specification (DOCSIS) is utilized for performing high speed data communication using cable television systems. According to DOCSIS, subscribers may access internet using a hybrid fiber-coaxial (HFC). By using high-order quadrature amplitude modulation (QAM) technology, current published DOCSIS 3.1 has a 10 Gbps download rate and a 1 Gbps upload rate. In addition, DOCSIS 3.1 is not limited to 6/8 MHz channel, but utilizes spectrum more flexibly by using orthogonal frequency-division multiplexing (OFDM), such that a spectrum range is enlarged as 200MHz.

In other words, since DOCSIS 3.1 operates on bands different from bands of DOCSIS 3.0, when a part of head-ends and cable modem termination systems (CMTSs) are updated to DOCSIS 3.1, traditional cable modems of DOCSIS 3.0 may become useless. Updates of the head-ends and CMTSs are hard to be completed in a short time, which need to updated locally and gradually. Therefore, how to be compatible to both DOCSIS 3.0 and DOCSIS 3.1 systems for a cable modem is a significant objective in the field.

### Summary of the Invention

It is therefore a primary objective of the present invention to provide a switchable diplexer and a cable modem capable of meeting requirements of DOCSIS and outputting signals of required operational bands.

This is achieved by a switchable diplexer and a cable modem according to the independent claims 1 and 6 respectively here below. The dependent claims pertain to corresponding further developments and improvements.

As will be seen more clearly from the detailed description following below, a claimed switchable diplexer (110) disposed in a cable modem (10) is disclosed herein. The switchable diplexer (110) comprises a control node (112), a plurality of filter circuits (HPF_1-HPF_3, LPF_1-LPF_3), and a first switch element (SW_H1, SW_L1). The control node (112) is configured to receive a control signal (S_control). At least one of the plurality of filter circuits is operated in a frequency band different from the frequency bands of the other in the plurality of filter circuits (HPF_1-HPF_3, LPF_1-LPF_3). The first switch element (SW_H1, SW_L1) is coupled between the control node and an end of each of the plurality of filter circuits (HPF_1-HPF_3, LPF_1-LPF_3). The first switch element (SW_H1, SW_L1) switches between the plurality of filter circuits (HPF_1-HPF_3, LPF_1-LPF_3) according to the control signal (S_control).

In another aspect of the invention, a claimed cable modem (10) is disclosed in the detailed description here below. The cable modem (10) comprises a processing circuit (100) and a switchable diplexer (110). The switchable diplexer (110) comprises a control node (112), a plurality of filter circuits (HPF_1-HPF_3, LPF_1-LPF_3), and a first switch element (SW_H1, SW_L1). The control node (112) is configured to receive a control signal (S_control). At least one of the plurality of filter circuits is operated in a frequency band different from the frequency bands of the other in the plurality of filter circuits. The first switch element (SW_H1, SW_L1) is coupled between the control node and an end of each of the plurality of filter circuits (HPF_1-HPF_3, LPF_1-LPF_3). The first switch element (SW_H1, SW_L1) switches between the plurality of filter circuits (HPF_1-HPF_3, LPF_1-LPF_3) according to the control signal (S_control).

### Brief Description of the Drawings

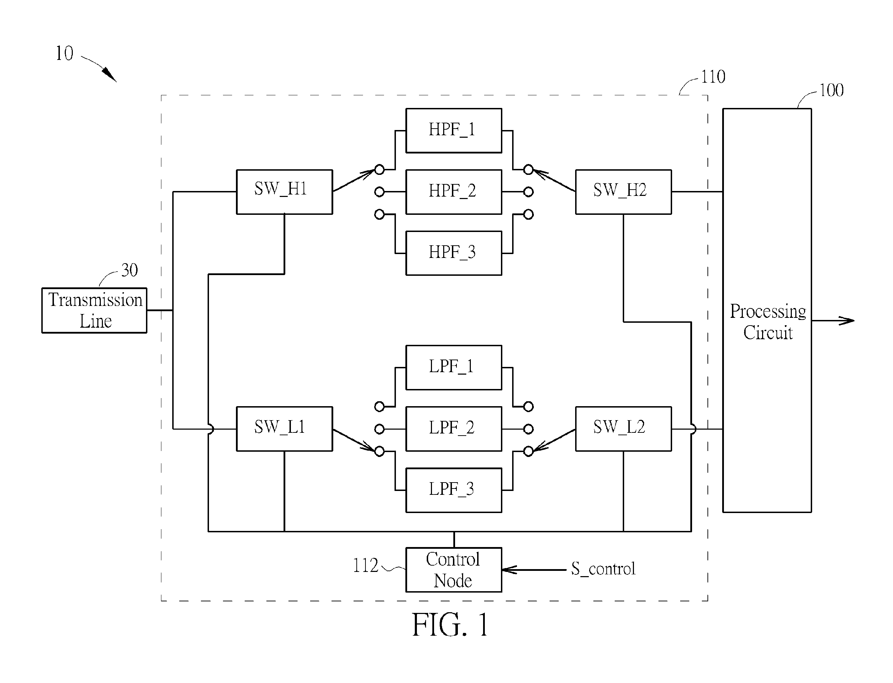

FIG. 1 is a schematic diagram of a cable modem according to an embodiment of the present invention.

### Detailed Description

Please refer to FIG. 1, which is a schematic diagram of a cable modem 10 according to an embodiment of the present invention. The cable modem 10 comprises a processing circuit 100 and a switchable diplexer 110. The cable modem 10 is connected to a transmission line 30. The cable modem 10 receives downlink signals through the transmission line 30, or transmits uplink signals to a head-end or a cable modem termination system (CMTS). The head-end and the CMTS are compliant to the DOCSIS 3.0 or DOCSIS 3.1 specification. Moreover, a range of an uplink band of DOCSIS 3.0 is 5MHz-85MHz, and a range of a downlink band of DOCSIS 3.0 is 108Mhz-1002Mhz. A range of an uplink band of Phase 2 of DOCSIS 3.1 is 5Mhz-200Mhz, and a range of a downlink band of Phase 2 of DOCSIS 3.1 is 254Mhz-1200Mhz. A range of an uplink band of Phase 3 of DOCSIS 3.1 is 5Mhz-400Mhz, and a range of a downlink band of Phase 3 of DOCSIS 3.1 is 500Mhz-1700Mhz. The switchable diplexer 110 comprises a control node 112, filter circuits HPF_1-HPF_3, LPF_1-LPF_3, and switch elements SW_H1, SW_H2, SW_L1, SW_L2. The control node 112 may receive a control signal S_control by a processor (not illustrated) of the processing circuit 100, or receive the control signal S_control through out-of-band signaling of the head-end or the CMTS. The switch elements SW_H1, SW_H2 are coupled to two ends of the filter circuits HPF_1-HPF_3 respectively, and switches between the filter circuits HPF_1-HPF_3 according to the control signal S_control. Moreover, the filter circuits HPF_1-HPF_3 may output operational bands higher than 500 MHz, 254 MHz, 108 MHz, such that the transmission line 30 may receive downlink signals under DOCSIS 3.0 or DOCSIS 3.1 specification. Similarly, the switch elements SW_L1, SW_L2 are coupled to two ends of the filter circuits LPF_1-LPF_3 respectively, and switches between the filter circuits LPF_1-LPF_3 according to the control signal S_control. Moreover, the filter circuits LPF_1-LPF 3 may output operational bands lower than 400 MHz, 200 MHz, 85 MHz, so as to transmit uplink signals under DOCSIS 3.0 or DOCSIS 3.1 specification to the transmission line 30.

In simple terms, the switchable diplexer 110 may switch between the filter circuits HPF_1-HPF_3, LPF_1-LPF_3 according to the control signal S_control, so as to accommodate DOCSIS 3.0 and DOCSIS 3.1 systems. Therefore, for different operational bands of the DOCSIS 3.0 and DOCSIS 3.1 systems, the switchable diplexer 110 may correctly filter out noise component and output the signal components in the operational bands. Thereby, there is no need for subscribers to buy another cable modem due to different head-ends and CMTSs. In addition, disposing the switch elements SW_H1, SW_H2, SW_L1, SW_L2 at the both ends of the filter circuits HPF_1-HPF_3, LPF_1-LPF_3 respectively may ensure that impedance of the cable modem 10 is matched.

In detail, when the transmission line 30 sends downlink signals with the operational band as 500Mhz-1700Mhz to the switchable diplexer 110, the switchable diplexer 110 switches the switch elements SW_H1, SW_H2, SW_L1, SW_L2 according to the control signal S_control, such that the switch elements SW_L1, SW_L2 are cutoff, and the switch elements SW_H1, SW_H2 are switched to the filter circuit HPF_1. Since only a connection between the switch elements SW_H1, SW_H2 is conducted, the impedance is ensured to be matched. In addition, since the filter circuit HPF_1 may output operational bands higher than 500 MHz, the filter circuit HPF_1 outputs the downlink signals with the operation bands in 500 MHz-1700 MHz and filters out the noise. Similarly, when the processing circuit 100 sends uplink signals with the operational band as 5MHz-85MHz to the switchable diplexer 110, the switchable diplexer 110 switches the switch elements SW_H1, SW_H2, SW_L1, SW_L2 according to the control signal S_control, such that the switch elements SW_H1, SW_H2 are cutoff, and the switch elements SW_L1, SW_L2 are switched to the filter circuit LPF_3. Since only a connection between the switch elements SW_L1, SW_L2 is conducted, the impedance is ensured to be matched. In addition, since the filter circuit LPF_3 may output operational bands lower than 85 MHz, the filter circuit LPF_3 outputs the uplink signals with the operation bands in 5MHz-85MHz and filters out the noise.

Notably, the cable modem 10 and the switchable diplexer 110 are embodiments of the present invention. Those skilled in the art may make modifications and alterations accordingly, and are not limited by what is disclosed herein. For example, the switchable diplexer 110 may be disposed in a set top box (STB). The filter circuits HPF_1-HPF_3, LPF_1-LPF_3 are not limited to being high pass filter circuits or low pass filter circuits, but may also be band pass filter circuits and operate on bands of 500Mhz-1700Mhz, 254Mhz-1200Mhz, 108Mhz-1002Mhz, 5Mhz-400Mhz, 5Mhz-200Mhz, 5MHz-85MHz, according to system requirements in order to meet requirements of DOCSIS 3.0 or DOCSIS 3.1. In order to correspond to multiple bands, a number of the filter circuits may be properly modified, and are not limited to being six as the embodiment stated here above. The switch elements SW_H1, SW_H2, SW_L1, SW_L2 are properly designed to avoid signal saturation and affection on signal qualities, which may be mechanical switches such as radio frequency relay, electronic switches such as pin diodes, single-pole double-throw digital (SPDT) digital switches, single-pole multi-throw (SPMT) digital switches, or switch integrated circuits, and are not limited by what is disclosed herein, which may be properly modified according to system design and requirements.

Furthermore, in order to reduce coupling effect and improve a degree of isolation, an arrangement of the filter circuits HPF_1-HPF_3, LPF_1-LPF_3 may be properly modified. For example, the filter circuits with similar stopbands may be disposed consecutively, and the filter circuits with completely non-overlapping passbands may be disposed separately. Therefore, when gaps between the filter circuits HPF_1-HPF_3, LPF_1-LPF_3 are reduced so as to reduce an overall size of the switchable diplexer, the degree of isolation of the filter circuits HPF_1-HPF_3, LPF_1-LPF_3 is guaranteed. In such a situation, since the filter circuit HPF_3 of the switchable diplexer 110 is utilized for outputting operational bands higher than 108 MHz, and the filter circuit LPF_1 is utilized for outputting operational bands lower than 400 MHz, the gap between the filter circuits HPF_3, LPF_1 may be properly reduced.

In the prior art, the operational bands of traditional cable modems under DOCSIS 3.0 specification are different from the operational bands under DOCSIS 3.1 specification; thus, when a part of the head-ends and CMTSs are updated to meet the DOCSIS 3.1 specification, the traditional cable modems may become useless. In addition, a complete update of the head-ends and CMTSs is hard to be accomplished in a short time, updates of the head-ends and CMTSs are usually done locally and gradually. Therefore, ideal cable modems should be compatible with both DOCSIS 3.0 and DOCSIS 3.1 systems, to make sure that subscribers may perform communication with the head-ends and CMTSs of DOCSIS 3.0 and DOCSIS 3.1, so as to promote DOCSIS 3.1.

In summary, the switchable diplexer of the present invention comprises multiple filter circuits corresponding to the operational bands of DOCSIS 3.0 and DOCSIS 3.1 and the switchable diplexer is switched to the proper filter circuit according to the control signal; therefore, when there are head-ends and CMTSs under DOCSIS 3.0 and DOCSIS 3.1 within a same local area, the switchable diplexer may correctly filter out noise components and output signal components in the operational bands. In such a situation, there is no need for subscribers to purchase another cable modem because of different head-ends and CMTSs. In addition, the impedance of the cable modem is ensured to be matched by the switch elements or diodes at the two ends of the filter circuits.

## Claims

1. A switchable diplexer (110), disposed in a cable modem (10), the switchable diplexer (110) **characterized by** comprising:
a control node (112), configured to receive a control signal (S_control);
a plurality of filter circuits (HPF_1-HPF_3, LPF_1-LPF_3), wherein at least one of the plurality of filter circuits (HPF_1-HPF_3, LPF_1-LPF_3) is operated in a frequency band different from the frequency bands of the other in the plurality of filter circuits (HPF_1-HPF_3, LPF_1-LPF_3); and
a first switch element (SW_H1, SW_L1), coupled between the control node and an end of each of the plurality of filter circuits (HPF_1-HPF_3, LPF_1-LPF_3), the first switch element (SW_H1, SW_L1) switching between the plurality of filter circuits (HPF_1-HPF_3, LPF_1-LPF_3) according to the control signal (S_control).

2. The switchable diplexer (110) of claim 1, **characterized in that** the plurality of filter circuits (HPF_1-HPF_3, LPF_1-LPF_3) are band pass filters, high pass filters or low pass filters.

3. The switchable diplexer (110) of claim 1 or 2, **characterized in that** the first switch element (SW_H1, SW_L1) is coupled to a transmission line (30), so as to deliver an uplink signal to the transmission line (30) or to receive a downlink signal from the transmission line (30).

4. The switchable diplexer (110) of any of claims 1-3, **characterized in that** the switchable diplexer (110) further comprises a second switch element (SW_H2, SW_L2), coupled between the control node (112) and another end of each of the plurality of filter circuits (HPF_1-HPF_3, LPF_1-LPF_3), and the second switch element (SW_H2, SW_L2) switches between the plurality of filter circuits (HPF_1-HPF_3, LPF_1-LPF_3) according to the control signal (S_control).

5. The switchable diplexer (110) of claim 4, **characterized in that** the first switch element (SW_H1, SW_L1) and the second switch element (SW_H2, SW_L2) are selected from a radio frequency relay, a mechanical switch, a pin diode, an electronic switch and a switch integrated circuit.

6. A cable modem (10), **characterized by** comprising:
a processing circuit (100); and
a switchable diplexer (110), comprising:
a control node (112), configured to receive a control signal (S_control);
a plurality of filter circuits (HPF_1-HPF_3, LPF_1-LPF_3), wherein at least one of the plurality of filter circuits (HPF_1-HPF_3, LPF_1-LPF_3) is operated in a frequency band different from the frequency bands of the other in the plurality of filter circuits (HPF_1-HPF_3, LPF_1-LPF_3); and
a first switch element (SW_H1, SW_L1), coupled between the control node and an end of each of the plurality of filter circuits(HPF_1-HPF_3, LPF_1-LPF_3), the first switch element (SW_H1, SW_L1) switching between the plurality of filter circuits (HPF_1-HPF_3, LPF_1-LPF_3) according to the control signal (S_control).

7. The cable modem (10) of claim 6, **characterized in that** the plurality of filter circuits (HPF_1-HPF_3, LPF_1-LPF_3) are band pass filters, high pass filters or low pass filters.

8. The cable modem (10) of claim 6 or 7, **characterized in that** the first switch element (SW_H1, SW_L1) is coupled to a transmission line (30), so as to deliver an uplink signal to the transmission line (30) or to receive a downlink signal from the transmission line (30).

9. The cable modem (10) of any of claims 6-8, **characterized in that** the switchable diplexer (110) further comprises a second switch element (SW_H2, SW_L2), coupled between the control node (112) and another end of each of the plurality of filter circuits (HPF_1-HPF_3, LPF_1-LPF_3), and the second switch element (SW_H2, SW_L2) switches between the plurality of filter circuits (HPF_1-HPF_3, LPF_1-LPF_3) according to the control signal (S_control).

10. The cable modem (10) of claim 9, **characterized in that** the first switch element (SW_H1, SW_L1) and the second switch element (SW_H2, SW_L2) are selected from a radio frequency relay, a mechanical switch, a pin diode, an electronic switch and a switch integrated circuit.
